# EUROPEAN PATENT APPLICATION

(11) **EP 1 235 170 A1**
(43) Date of publication of application: **28.08.2002**
(21) Application number: 01301547.4
(22) Date of filing: 21.02.2001
(51) Int. Cl.: G06F 17/60

(54) **Performing a purchasing transaction**

(71) Applicant: HITACHI EUROPE LIMITED, Maidenhead, Berkshire, SL6 8YA (GB)
(72) Inventor: Ito, Atsushi, Ealing, London (GB)
(74) Representative: Read, Matthew Charles

(57) **Abstract**

A system for performing a purchasing transaction utilises a mobile station (1) to make a purchase through a mobile network (PLMN3) that has a network accounting server (18) which bills network subscriber charges to the subscriber. The mobile station (1) acts as a client station and sends an order for a selected purchase to a vending server (16) that offers at least one purchasing opportunity to the mobile station through the network. The vending server may be coupled to the mobile network through the Internet. The vending server then transmits invoice information for the selected purchase to the mobile station, which is then forwarded to the network accounting server (18) for billing to the subscriber along with the usual network usage charges in a common bill. The network accounting server then generates receipt information corresponding to the invoice information and forward the receipt information to the vending server to enable delivery of the purchase. The invoice and receipt information may be digitally signed for authentication purposes.

## Description

This invention relates to performing a purchasing transaction and has particular but not exclusive application to mobile telecommunications systems.

Recently, mobile commerce, known as m-commerce, has been the subject of much development to facilitate the purchasing of goods and services from a mobile telephone handset or other mobile station such as a personal digital assistant (PDA). In addition to handling conventional voice telephony, digital data can be transferred through the mobile network to and from a mobile station. For example, wireless application protocol (WAP) allows mobile telephone handsets to be used as web browsers. The mobile station, in use, establishes a data transmission link through a public land mobile network (PLMN) and acts as a client for a server known as a WAP gateway, that is accessible through a predetermined telephone number. The WAP server may provide access to the Internet or other wide area networks. The server provides data in wireless markup language (WML) which can be considered as a variant of conventional hypertext markup language (HTML). The handset runs a WAP browser to display and manipulate data from the server. Other digital data transmission protocols are known, for example the i-mode packet system used extensively in Japan.

In m-commerce, mobile telephone network subscribers may use their mobile handsets to browse purchasing opportunities offered by a number of vending servers. Having selected a purchase, the subscriber sends an order from the mobile handset and the goods or services delivered to the subscriber. The goods or service may comprise data that is downloaded to the mobile telephone handset or may comprise physical goods which are delivered by mail or other convenient means to an address specified by the subscriber.

Conventionally, payment for the goods or service has been carried out using a credit card but this involves complex procedures for transmitting the credit card details to the vending server through the mobile network.

The present invention seeks to provide an improved way of carrying out a purchasing transaction in which payment is achieved in an improved, simplified manner for the subscriber.

In accordance with the invention there is provided a method of performing a purchasing transaction using a client station to make a purchase offered by a vending server through a network which has associated subscriber charges for usage thereof that are billed to the subscriber through a network accounting server, the method comprising: sending an order for a selected purchase from the client station to the vending server, generating invoice information for the selected purchase and transmitting the invoice information from the vending server to the client station, forwarding the invoice information from the client station to the network accounting server for billing thereof, generating receipt information at the network accounting server, and forwarding the receipt information from the network accounting server to the vending server whereby to enable delivery of the purchase.

In accordance with the invention, there may be no need to input a credit card number or the like. Furthermore, the subscriber is presented with an invoice from the network service provider which may also include subscriber charges for usage of the network and it need not be necessary to enter into a contract with a separate payment company such as a credit card operator to perform m-commerce through the mobile network.

The invention also provides a convenient payment mechanism for vendors that offer goods and services through the vending server.

The invention also includes a system for performing the aforedescribed method.

The invention further includes a client station for use in the method, a vending server for use in the method and network accounting server configured for use in the method, together with methods of operating them.

Also provided according to the invention are respective computer programs to be run by the client station, the vending server and the network accounting server to perform the aforementioned methods in accordance with the invention.

In order that the invention may be more fully understood an embodiment thereof will now be described by way of example with reference to the accompanying drawings in which:
Figure 1 is a schematic block diagram of an overall mobile system for use in performing a purchasing method according to the invention;
Figure 2 is a schematic block diagram of circuitry of the mobile station 1 shown in Figure 1;
Figure 3 is a schematic flow diagram of signal communication during a purchasing transaction;
Figure 4 is a schematic illustration of invoice information produced by the vending server;
Figure 5 is a schematic illustration of receipt information produced by the network accounting server;
Figure 6 is a schematic flow diagram of a process carried out at the vending server;
Figure 7 is a schematic illustration of data held in the database of the vending server;
Figure 8 is a schematic illustration of data held in a database of the network accounting server;
Figure 9 is a schematic flow diagram illustrating steps carried out by the network accounting server to bill individual subscribers;
Figure 10 is a schematic flow diagram of steps carried out by the network accounting server when payment is received from a subscriber;
Figure 11 is a schematic illustration of operations performed by the financial institution server;
Figure 12 illustrates a clearing process performed by the financial institution server.

### Network overview

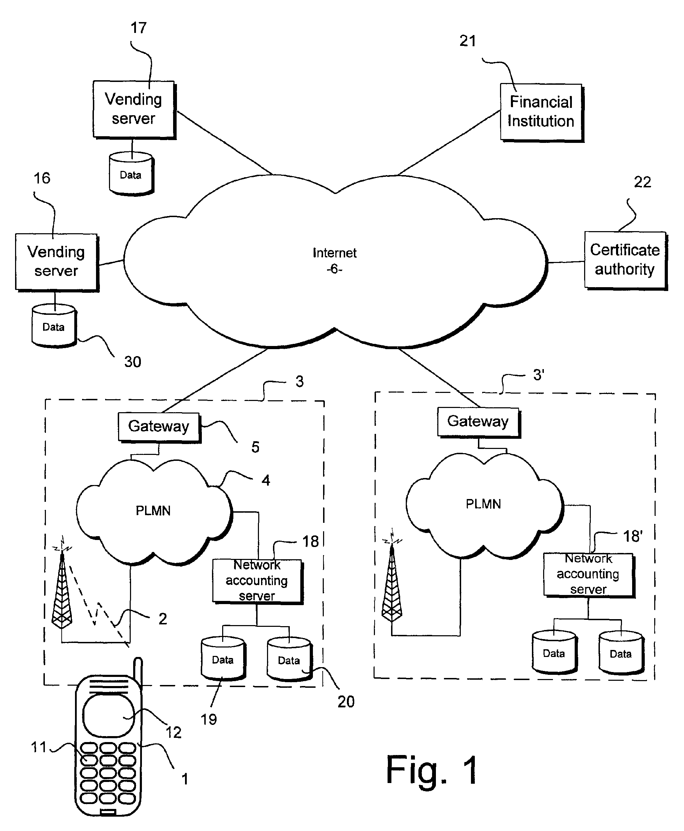

Referring to Figure 1, a mobile station 1 in the form of a mobile telephone handset is connected by a radio link 2 to a first mobile network 3 comprising a PLMN 3 which is configured to provide a data service in addition to conventional voice telephony. For the data service, the PLMN includes a data network 4 connected through a gateway 5 to an external wide area network 6 such as the Internet. The network 3 may for example comprise a GSM network which is WAP enabled, in which the gateway 5 comprises a WAP server. Alternatively, the network may be configured according to the i-mode specification although other network standards and data transmission protocols may be used and the invention is not restricted to any particular protocol or standard. A second mobile network 3' is shown connected to the Internet 6 in a similar fashion to the first network 3.

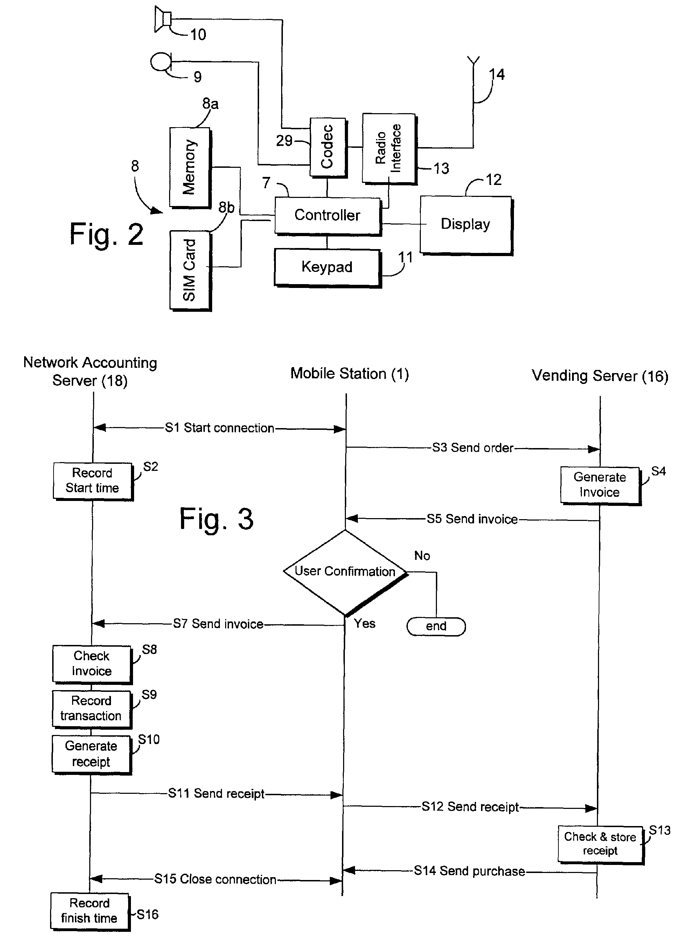

The circuitry of the mobile station 1 is shown in more detail in Figure 2. The signal processing is carried out under the control of a digital micro-controller 7 which has an associated memory 8 which comprises a flash memory 8a that contains programs for controlling the browser functionality of the handset and controlling vending functionality in accordance with the invention. The memory 8 may also include a smart card 8b in the form of a SIM card as used in GSM to include the usual subscriber's identity and authentication functions, and also the program for controlling vending functionality in accordance with the invention may be included on the smart card.

Electrical analogue signals are produced by microphone 9 and analogue audio signals for the handset are produced by earpiece 10. The micro-controller 7 receives instruction signals from a keypad 11 and controls operation of a liquid crystal display 12. Information concerning the identity of the subscriber may be held on a smart card (not shown) such as a GSM SIM card. In this example, the handset is WAP enabled and the controller 8 provides a WAP browser using the LCD display 12, which can be manipulated by use of the keypad 11. The radio link 2 is established through an r.f. interface 13 coupled to antenna 14. Audio speech signals are connected to the rf interface 13 through codec 15 connected to microphone 9 and speaker 10.

When a connection is made from the handset 1 to a telephone number associated with the gateway 5, typically a WAP server, access is provided for the handset to remote vending servers 16, 17 connected to the gateway 5 through the Internet 6. Thus, in use, the subscriber can review the goods and services offered by one or more of the vending servers 16, 17, by reviewing and manipulating the display provided in the WAP browser on display 12, using the keys of keypad 11.

As shown in Figure 1, the PLMN 3 has an associated network accounting server 18 which is operative to keep a record of subscriber charges associated with use of the network by individual subscribers. Typically, for a GSM network, call subscriber charges are made up of a monthly charge together with a charge relating to the usage of the network e.g. the number of calls made, their destination and duration. The call charges may treat voice and data calls individually. These call charges are accumulated on a database 19 and bills are sent to the subscribers individually, on a regular basis e.g. once per month. The accounting server may be associated with the home location register (HLR) for the PLMN 3 to provide appropriate billing information for the individual subscribers to the network.

The accounting server also has an associated database 20 for recording information about purchases made from the vending servers 16, 17, as will be explained in more detail hereinafter.

A second PLMN 3' is shown for co-operating with the vending servers 16, 17 through the Internet. The second PLMN 3' has an accounting server 18' which operates in the same way as the server 18 of the network 3.

Also connected to the network 4, 6 is a server 21 for a financial institution, which is operative to assist in carrying out a reconciliation of purchases and payments made through the networks 3, 3' in respect of individual vending servers, as will be explained in more detail herinafter. A certificate authority 22 is also connected to the network 4, 6 to provide keys for digitally signing transmissions made during a purchasing transaction.

### Carrying out a purchasing transaction

A method of carrying out a purchasing transaction using the mobile station 1 to make a purchase from vending server 16 will now be described with reference to Figure 3.

Initially, the subscriber operates the mobile station 1 so as to establish data communication through the PLMN 4. Typically, this is established by calling a telephone number associated with the gateway 5 so as to establish a data link in a manner well known *per se.* The subscriber may then use the browser displayed on display 12 of the mobile station 1 to browse goods and services offered by the vending servers. In this example, it is assumed that the subscriber has located a purchase offered by vending server 16 and decides to place an order for the purchase.

Referring to Figure 3, at step S1, the commencement of a purchasing transaction is notified through the PLMN to the accounting server 18 which records the start time of the transaction at step S2. The start time may be recorded on database 20 as shown schematically in Figure 3.

Then, at step S3, the subscriber operates the keypad 11 so as to send an order for the purchase to the vending server 16. This is typically achieved by selecting a link displayed on the browser, by manipulation of the keypad 11.

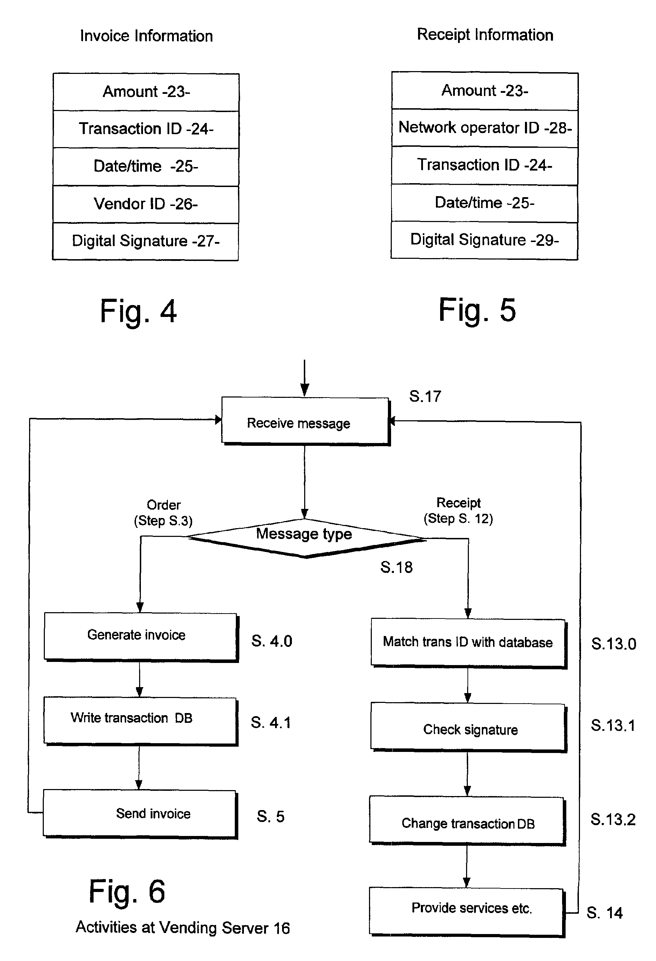

As a result of making this purchase selection, the vending server 16 generates at step S4, invoice information corresponding to the purchase. An example of the invoice information is shown in Figure 4 and includes data 23 relating to the price of the purchase a transaction identification code or transaction ID 24 which may comprise a unique number of alphanumeric character set associated with the transaction, date and time information 25 for the transaction, a unique identification code 26 corresponding to the vendor for the vending server 16, and a digital signature 27 corresponding to the vendor for the vending server 16. It will be understood that the invoice information shown in Figure 4 can be digitally signed using an asymmetrical hash function and a private key associated with the vendor for the vending server 16 to provide the digital signature 27. As well known in the art, the digital signature can be checked by utilising a public key associated with the private key and performing the hash function.

At step S5, the invoice information shown in Figure 4 is transmitted through the network to the mobile station 1 and displayed on its display 12. The subscriber views the information at step S6 and determines whether it corresponds to the intended purchase. If the subscriber approves of the invoice information, a predetermined key on the keypad 11 of the handset 1 is operated, to cause the invoice information to be sent at step S7 to the network accounting server 18.

At step S8, the data of the invoice information is checked for authenticity and identity using the public key associated with the vending server 16 obtained from the certificate authority 22 shown in Figure 1. Assuming that the invoice information is successfully authenticated, the data is recorded at step S9 in the database 20 in association with the start time for the transaction recorded at step S2 and information concerning the subscriber for the mobile station 1. Data concerning the purchase is thus recorded in the database 20 for future billing to the subscriber by the network accounting server 18.

At step S10, the network accounting server 18 generates receipt information corresponding to the purchase, indicating that the invoice has been satisfactorily recorded in the database 20. The receipt information is shown in more detail in Figure 5 and comprises the price 23 of the purchase, a unique identification code corresponding to the network operator i.e. the operator of PLMN 3, the transaction identification code 24, the date and time 25, the vendor identification code 26, together with a digital signature 29 produced using a private key corresponding to the accounting server 18.

The receipt information of Figure 5 is transmitted at step S11 shown in Figure 3 to the mobile station 1. Then, at step S12, the mobile station 1 forwards the receipt information to the vending server 16, using the URL for the vending server 16 that was identified at step S3.

At step S13, the vending server 16 carries out a check of the integrity of the data included in the receipt information making use of a public key associated with the private key for the accounting server 18, found in the certificate authority 22.

At step S14, a notification is sent back to the mobile station 1 from the vending server 16. The notification indicates that the product or service is being sent to the subscriber. For example, if the product or service comprises a software download, the download may be provided at step S14. However, if the purchase comprises a physical product, it may be delivered by conventional mail or other delivery services and the notification at step S14 may provide information concerning the mode of delivery together with delivery time details. Upon receipt of the notification at step S14, the mobile station 1 sends a termination message at step S15 to the network accounting server 18 and a record of the finishing time for the transaction is recorded on the database 20 at step S16.

The various steps performed at the vending server 16 are shown in more detail in Figure 6. When a message is received from the mobile station 1, as shown at step S17, it is checked at step S18 to see whether it corresponds to an order sent at step S3 or receipt information sent at step S12 shown in Figure 3.

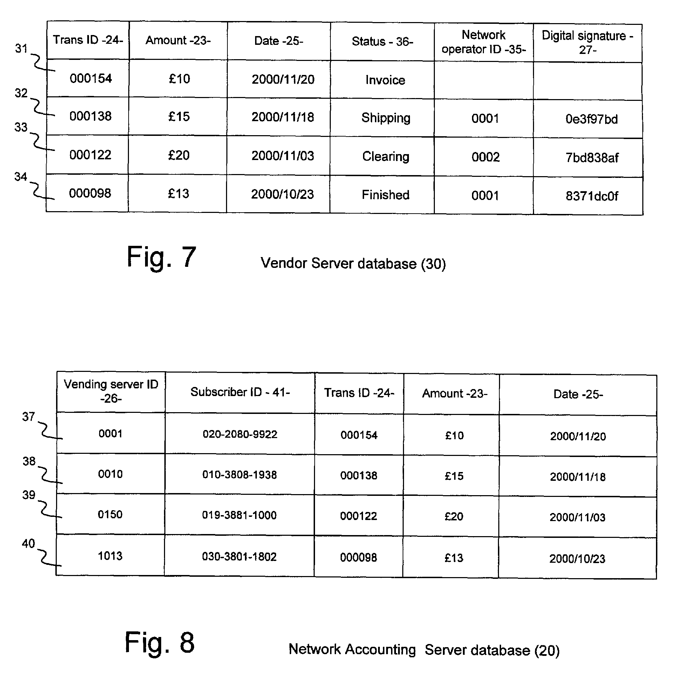

If the information constitutes an order for a purchase (step S3), the invoice information is generated at step S4 as previously described with reference to Figure 3. Furthermore, the invoice information is written to a transaction database 30 associated with the vending server 16, at step S4.1 shown in Fig. 4. Then, at step S5, the previously described invoice information is sent to the mobile station 1. An example of the data written to the database 30 is shown in Figure 7. The data is shown schematically in an array of rows and columns, with each row including data for a particular transaction, identified by an individual transaction identification code 24. Four data rows 31-34 are shown. Each row indicates the transaction ID 24 for the invoice information, the price 23, the data 25 of the transaction, an identification code 25 for the network operator from which the invoice was requested. It will be understood that the vending servers can offer purchasing opportunities through more than one mobile network and in this example can carry out purchasing transactions with subscribers of the both the networks 3, 3' shown in Figure 1. The code 0001 denotes network 3 and 0002 denotes network 3' shown in Figure 1. The row data of Figure 4 also includes a digital signature 27 associated with the accounting server 18 for the network concerned, together with a status flag 36 which indicates the status of the invoice information.

Considering the status information is more detail, when the invoice information is initially generated at step S4 shown in Figure 3, and written to the data base at step S4.1 in Figure 6, the status flag is set to "invoice" shown in row 31. As will be described in more later, as the transaction is progressed, the status flag is changed through a series of stages "shipping", "clearing" and "finished".

Referring again to Figure 6, when receipt information is received at the vending server 16, at step S12 of Figure 3, the vending server carries out a number of checking and storing steps in order to perform step S13 of Figure 3. As shown in Figure 6, at step S13.0, the transaction ID 24 for the receipt information is compared with a corresponding entry in the vending server database shown in Figure 7. Then, at step S13.1 the digital signature of the receipt information is checked for authenticity. Thereafter, the transaction status flag 36 is updated at step S13.2 in order to indicate that the purchase is now being shipped to the subscriber i.e. the status flag is changed to "shipping". Then, an indication of delivery of the goods or services is provided at step S14 as previously described.

Considering now the database 20 for the network accounting server 18, data corresponding to individual purchase transactions are maintained as shown schematically in Figure 8. Individual rows of data 37-40 correspond to individual transactions that are each denoted by the identification code 26 for the vending server concerned, a subscriber identification code 41 which may comprise the telephone number of the subscriber i.e. their MSISDN, the transaction identification code 24, the price 23 and the date 25. The data information also includes a record of the start time and associated finish time for the transaction recorded at steps S2 and S16 although this is not shown in Figure 8 for purposes of clarity.

### Subscriber billing

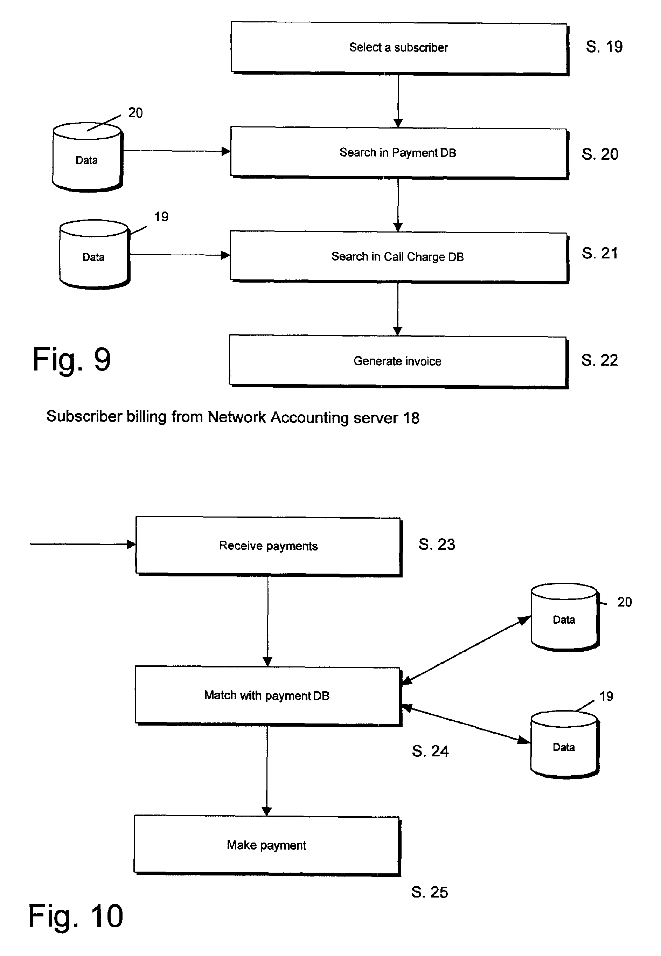

Individual subscribers to the mobile network 3 receive invoices on a regular basis e.g. as a monthly statement which includes both subscriber call charges for use of the network e.g. for voice and data calls as recorded on database 19 shown on Figure 1, together with charges corresponding to purchases made from the vending servers 16, 17 as recorded on database 20. The process for preparing such billing statements is illustrated in Figure 9. At step S19, an individual subscriber is selected by the accounting server processor and a search is made corresponding to the subscriber ID 41 for purchase transaction attributable to the subscriber ID during the relevant billing period e.g. one month, at step S20. At step S21, the corresponding search is made through the database 19 for network call charges attributable to the subscriber ID. The billing information derived as a result of steps S20 and S21 is collated and printed in an invoice at step S22 which is sent to the billing address for the subscriber. As previously explained, the network accounting server 18 may be associated with a HLR for the PLMN 3 and the subscriber billing address may be obtained from the HLR.

### Payment

Figure 10 illustrates the procedure performed at the network accounting server 18 when payments are received from individual subscribers. Payments can be made by any conventional payment method, for example direct debit, bankers cheque or credit card. The payments are entered into the system at step S23, which may involve manual data entry depending on the payment method. At step S24, the accounting server 18 matches the received payments against the entries in the database 19, 20. Then, at step S25, a payment is made in respect of matched payment items for the database 20 i.e. purchases made from the vending servers 16, 17, for which payment has been received.

The payment is made to the financial institution server 21 which, in turn pays the individual vending servers 16, 17 as will now be described.

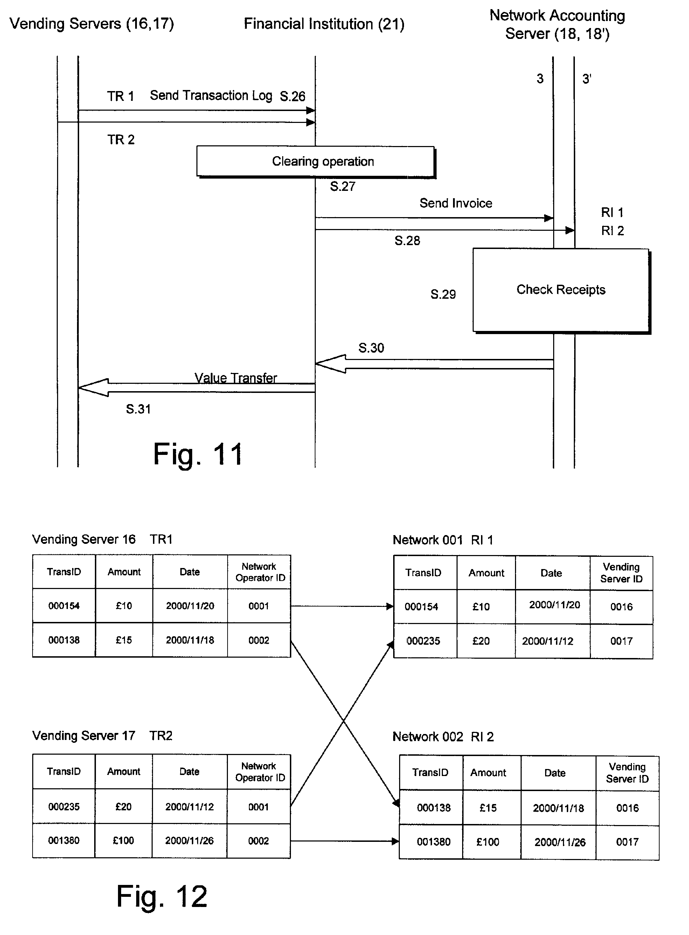

Referring to Figure 11, each individual vending server periodically sends a transaction log corresponding to the invoice information for individual purchase transactions made by subscribers of individual networks 3, 3', as shown schematically at step S26. The financial institution server 21 then carries out a clearing process at step S27 which is shown in more detail in Figure 12 in which the transactions are sorted from the various servers according to the network concerned. In the illustration of Figure 12, transaction logs TR1, TR2 from vending servers 16, 17 are shown corresponding to data from the databases 30 for the individual vending server 16 and the corresponding database for the server 17 (not shown). It will be seen that each transaction log includes transactions relevant to the individual networks 3, 3' as designated by the network operator identification IDs 0001, 0002. The financial institution server 21 sorts the data according to network operator ID and produces individual reconciliation invoices RI1 and RI2 of transactions from the vending servers 16, 17 in respect of the networks 3, 3' individually. The reconciliation invoices RI1, RI2 are sent to the individual network accounting servers for the networks concerned at step S28 shown in Figure 11.

Then, in step S29, the individual purchase transactions listed in the reconciliation invoices are checked against information in the accounting server for the network concerned. Thus, for example, considering reconciliation invoice RI1 sent to the network accounting server 18, the individual transaction items are checked with corresponding entries in the payment database 20 and a determination is made of whether payment has been received for the transactions individually and a list of such paid items is created.

Then, at step S30, a payment notification is made to the financial institution server 21 corresponding to the items for which payment has been made by network subscribers, and funds are transferred to the financial institution. The transfer of funds may be achieved by any conventional means such as bank transfer, credit card payment and the like.

The financial institution server then notifies the individual vending servers 16, 17 that a payment is to be made to them, listing the items concerned. This notification is illustrated schematically as step S31 in Figure 11. Also, funds are transferred in the conventional manner to the vendors associated with the vending servers 16, 17 by any suitable conventional payment method such as bank transfer or the like.

Thus, in accordance with the invention, the individual subscribers to the mobile network 3 are provided with a monthly statement which includes the usual monthly subscriber charges for the network together with individual purchases from the vending servers 16, 17.

The described system has the advantage that there is no need for the subscriber to input a credit card number or the like to the mobile station in order to facilitate payment. Instead, an individual payment invoice is received from the mobile network operator which may conveniently be incorporated into the usual monthly bill for call charges for the network. Furthermore, there is no need to enter into a contract with a payment company specifically for the purpose of m-commerce through the mobile network. For the vendors that sell goods and services through the vending servers, the system has the advantage of providing an easy payment method for individual customers without the need to enter into individual contracts with the network operators.

Many modifications and variations falls within the scope of the claimed invention. For example, whilst the receipt information sent at step S11 in Figure 3 is forwarded from the accounting server 18 to the mobile station 1, and then forwarded to the vending server at step S12, the receipt information could be forwarded directly without passing through the mobile station 1. However, the described system has the advantage that the address of the mobile station 1 is known to the accounting server 18 in terms of the mobile telephone handset number (MSISDN) and the address of the vending server 16 is known to the mobile station as a result of the address information established at step S3 and S5. Thus, the transaction can be performed without the need for a direct address relationship to be established between the vending server 16 and the accounting server 18 which provides for increased security and a simplified transactional procedure.

Many different hardware configurations can be used. For example although the financial institution 21 is shown as a server connected to the Internet, it need not be configured in this way and may comprise a computer configured to receive the transaction logs and send the receipt invoices through any suitable delivery process. Similarly, the certificate authority 22 need not be connected to the various servers through the Internet. Also, different authentication methods can be used to authenticate the invoice and receipt information such a common key method, checksum, keyed hash algorithm and other techniques known *per se* in the art

Furthermore, whilst the invention has been described primarily in terms of GSM and WAP, it will be understood that i-mode or third generation networks that use UMTS can be readily utilised and the invention is not restricted to any particular network configuration and protocol. Also, the mobile station 1 need not necessarily be a mobile telephone handset but could comprise a PDA or other mobile communication device. The invention is also applicable to non-mobile networks for making purchases through personal computers and other workstations.

## Claims

1. A method of performing a purchasing transaction using a client station to make a purchase offered by a vending server through a network which has associated subscriber charges for usage thereof that are billed to the subscriber through a network accounting server, the method comprising:
sending an order for a selected purchase from the client station to the vending server,
generating invoice information for the selected purchase and transmitting the invoice information from the vending server to the client station,
forwarding the invoice information from the client station to the network accounting server for billing thereof,
generating receipt information at the network accounting server, and
forwarding the receipt information from the network accounting server to the vending server whereby to enable delivery of the purchase.

2. A method according to claim 1 including authenticating the receipt information received by the vending server.

3. A method according to claim 1 or 2 including authenticating the invoice information received by the network accounting server.

4. A method according to any preceding claim including billing the subscriber for the purchase from the network accounting server.

5. A method according to claim 4 including accumulating by means of the network accounting server subscriber billing information for both the subscriber charges associated with the network and an amount for the selected purchase derived from the invoice information and sending a bill to the subscriber corresponding to the subscriber billing information.

6. A method according to any preceding claim including forwarding the receipt information to the client station and forwarding the receipt information from the client station to the vending server.

7. A method according to any preceding claim including making a plurality of purchases from different vending servers through the network.

8. A method according to any preceding claim including providing an accumulated sum corresponding to invoiced purchases made by subscribers to the network from a particular vending server.

9. A method according to claim 8 including providing payment to the vending server corresponding to the accumulated sum.

10. A method according to any preceding claim wherein the network comprises a mobile telecommunications network and the client station comprises a mobile station for performing telecommunications through the mobile network, the method including establishing a link through the mobile telecommunications network to the vending server, and making a link through the mobile telecommunications network to the network accounting server.

11. A method according to claim 10 wherein the vending server is coupled to a wide area network and the mobile telecommunications network is coupled to the wide area network through a gateway, and including establishing the link to the vending server through the wide area network, the gateway and the telecommunications network.

12. A system for performing a purchasing transaction comprising:
a network which has associated subscriber charges for usage thereof
a network accounting server configured to bill network subscriber charges to the subscriber,
a client station for making a purchase, and
a vending server for offering at least one purchase to the client station through the network,
the client station being configured to send an order for a selected purchase from to the vending server,
the vending server being operable to transmit invoice information for the selected purchase to the client station,
the client station being configured to forward the invoice information to the network accounting server for billing thereof, and
the network accounting server being configured to generate receipt information corresponding to the invoice information and forward the receipt information to the vending server whereby to enable delivery of the purchase.

13. A system according to claim 12 wherein the vending server is operable to authenticate the receipt information received from the network accounting server.

14. A system according to claim 12 or 13 wherein the network accounting server is operable to authenticate the invoice information received from the vending server.

15. A method of using a client station to make a purchase offered by a vending server through a network which has associated subscriber charges for usage thereof that are billed to the subscriber through a network accounting server, the method comprising:
sending an order for a selected purchase from the client station to be received by the vending server,
receiving from the vending server invoice information for the selected purchase,
forwarding the invoice information to be received by the network accounting server for billing thereof,
receiving receipt information corresponding to the purchase from the network accounting server, and
forwarding the receipt information to the vending server whereby to enable delivery of the purchase.

16. A client station operable to make a purchase offered by a vending server through a network which has associated subscriber charges for usage thereof that are billed to the subscriber through a network accounting server, the client station being operable to:
send an order for a selected purchase from the client station to be received by the vending server,
receive from the vending server invoice information for the selected purchase,
forward the invoice information to be received by the network accounting server for billing thereof,
receive receipt information corresponding to the purchase from the network accounting server, and
forward the receipt information to the vending server whereby to enable delivery of the purchase.

17. A client station according to claim 16 comprising a mobile telephone handset.

18. A client station according to claim 16 comprising a personal digital assistant.

19. A client station according to claim 16 operable through a mobile telecommunications network.

20. A client station according to any one of claims 16 to 19 including a display operable to display the invoice information received from the vending server prior to being forwarded to the network accounting server.

21. A method of operating a network accounting server for a network which has associated subscriber charges for usage thereof that are billed to a network subscriber by means the network accounting server, wherein the network accounting server is used to bill a network subscriber for a purchasing transaction wherein a client station makes a purchase offered by a vending server through the network, the method comprising:
receiving invoice information for a selected purchase produced by the vending server which has been forwarded thereto from the client station,
generating receipt information corresponding to the invoice information for the purchase and forwarding the receipt information to the vending server whereby to enable delivery of the purchase, and
billing the subscriber for the purchase using the invoice information concerning the purchase.

22. A method according to claim 21 including accumulating by means of the network accounting server subscriber billing information for both the subscriber charges associated with the network and an amount for the selected purchase derived from the invoice information and sending a bill to the subscriber corresponding to the subscriber billing information.

23. A network accounting server for billing subscriber charges associated with use of a network to a subscriber, the network accounting server further being operable to bill a network subscriber for a purchasing transaction wherein a client station makes a purchase offered by a vending server through the network, and comprising a processor configured to:
receive invoice information for a selected purchase produced by the vending server which has been forwarded thereto from the client station,
generate receipt information corresponding to the invoice information for the purchase and forward the receipt information to be received by the vending server whereby to enable delivery of the purchase, and
bill the subscriber for the purchase using the invoice information concerning the purchase.

24. A method of operating vending server to perform a purchasing transaction wherein a client station makes a purchase offered by the vending server through a network which has associated subscriber charges for usage thereof that are billed to the subscriber through a network accounting server, the method comprising:
receiving an order for a selected purchase from the client station,
generating invoice information for the selected purchase and transmitting the invoice information to the client station such that the invoice information can be forwarded from the client station to the network accounting server for billing thereof whereby the network accounting server produces receipt information corresponding to the invoice,
receiving the receipt information from the network accounting server, and
enabling delivery the purchase.

25. A vending server to perform a purchasing transaction wherein a client station makes a purchase offered by the vending server through a network which has associated subscriber charges for usage thereof that are billed to the subscriber through a network accounting server, the vending server including a processor configured to:
receive an order for a selected purchase from the client station,
generate invoice information for the selected purchase and transmit the invoice information to be received by the client station such that the invoice information can be forwarded from the client station to the network accounting server for billing thereof whereby the network accounting server produces receipt information corresponding to the invoice,
receive the receipt information produced by the network accounting server, and
enable delivery the purchase.

26. A computer program to be run by a client station to perform a method as claimed in claim 15.

27. A smart card in which is recorded a program as claimed in claim 26.

28. A computer program to be run by a network accounting server to perform a method as claimed in claim 21.

29. A computer program to be run by a vending server to perform a method as claimed in claim 24.
